Europäisches Patentamt

European Patent Office

Office européen des brevets

(19)

(11) **EP 0 689 768 B1**

(12) **FASCICULE DE BREVET EUROPEEN**

(45) Date de publication et mention
de la délivrance du brevet:
**10.01.2001 Bulletin 2001/02**

(51) Int Cl.[7]: **A01N 31/02**
// (A01N31/02, 37:26, 25:30)

(21) Numéro de dépôt: **95401545.9**

(22) Date de dépôt: **28.06.1995**

(54) **Composition et procédé de traitement prophylactique rapide et non irritant de la mammite chez la vache laitière**

Zusammensetzung und Verfahren zur schnellen Prophylaktischen und nichtirritierenden Behandlung von Euterentzündungen bei Milchkühen

Composition and process for the rapid prophylactic and not irritating treatment of udder inflammation of milkers

(84) Etats contractants désignés:
**AT BE DE ES FR GB NL**

(30) Priorité: **01.07.1994 FR 9408180**

(43) Date de publication de la demande:
**03.01.1996 Bulletin 1996/01**

(73) Titulaire: **PENNGAR S.A.**
**72500 Vaas (FR)**

(72) Inventeurs:
• **Schapira, Joseph**
**F-75015 Paris (FR)**
• **Vincent, Jacques**
**F-78750 Mareil Marly (FR)**

• **Geneix, Catherine**
**F-92000 Nanterre (FR)**
• **Caire, Brigitte**
**F-92700 Colombes (FR)**

(74) Mandataire: **Chameroy, Claude et al**
**c/o Cabinet Malémont**
**42, avenue du Président Wilson**
**75116 Paris (FR)**

(56) Documents cités:
EP-A- 0 030 576         EP-A- 0 190 797
EP-A- 0 252 310         EP-A- 0 381 618
EP-A- 0 457 656         WO-A-93/16737
DE-A- 3 723 976         GB-A- 1 588 649
GB-A- 2 231 496         GB-A- 2 247 171

**Description**

L'invention a pour objet une composition et un procédé de traitement prophylactique rapide et non irritant de la mammite chez la vache laitière.

On connaît déjà des compositions de traitement prophylactique de la mammite.

Il est également connu qu'à chaque traite et au moment de la désinfection du trayon avant la traite proprement dite, il s'écoule environ 30 secondes entre le trempage du trayon dans la composition désinfectante et la mise en place du manchon trayeur.

Il est souhaitable qu'au moment de cette mise en place la désinfection du trayon soit la plus complète possible.

Il existe donc, en rapport avec la prophylaxie de la mammite chez la vache laitière, un besoin permanent de disposer de compositions désinfectantes à action de plus en plus rapide; de plus, ces compositions ne doivent pas provoquer des irritations ni au contact de la peau chez l'utilisateur ni au contact des muqueuses chez l'animal; l'utilisateur ne doit pas rencontrer des inconvénients du type irritation de la peau en désinfectant ses mains, notamment après avoir soigné un animal.

Le résultat recherché est donc la destruction la plus rapide possible des populations bactériennes responsables de la mammite chez la vache laitière.

Et il est connu que ce résultat peut être obtenu par l'utilisation d'alcools à bas poids moléculaire, notamment d'alcools saturés à chaîne courte en $C_2$ ou $C_3$.

Mais l'inconvénient inhérent à la mise en oeuvre de ces alcools réside dans le fait qu'une destruction rapide des populations bactériennes en question et notamment l'obtention d'un effet désinfectant total en un temps très court, en particulier de 30 secondes au plus, nécessite la présence desdits alcools dans la composition désinfectante mise en oeuvre à une concentration élevée, notamment supérieure à 20%; or, à ces concentrations élevées nécessaires pour que le résultat recherché puisse être atteint, les alcools en question peuvent conduire à des irritations dans le cas d'application répétitive et présentent le danger de conduire à des mélanges explosifs avec l'air en raison de leur point éclair très bas, par exemple voisin de 15°C pour le n-propanol.

Le document EP-A-30576 divulgue des compositions destinées à l'utilisation chez la vache laitière, contenant un alcool et un polymère filmogène, aussi qu'un humidifiant tel que le glycerol.

L'invention a donc pour but, surtout, de remédier à ces inconvénients et de mettre à la disposition de l'utilisateur une composition et un procédé de traitement prophylactique rapide et non irritant de la mammite chez la vache laitière, cette composition et ce procédé mettant en oeuvre les alcools définis ci-dessus.

Et la Société Demanderesse a eu le mérite d'avoir trouvé, à l'issue de recherches approfondies, que ce but était atteint, c'est-à-dire que, dans une composition désinfectante contenant moins de 20% d'alcools à bas poids moléculaire, notamment d'alcools saturés à chaîne courte en $C_2$ ou $C_3$, donc non irritante, le pouvoir désinfectant de l'alcool se trouvait augmenté de façon décisive, assurant une désinfection complète en moins de 30 secondes dès lors que ladite composition comporte au moins l'un des adjuvants du groupe comprenant le propylèneglycol, les agents tensio-actifs non ioniques et certains agents séquestrants en des proportions particulières.

Il s'ensuit que la composition de traitement prophylactique conduisant à une désinfection complète en moins de 30 secondes et non irritante, conforme à l'invention, comporte, en solution dans l'eau, de 10 à 18% en poids d'un alcool à bas poids moléculaire, notamment d'un alcool saturé à chaîne courte en $C_2$ ou $C_3$ et au moins l'un des trois adjuvants suivants, à savoir:

- le propylèneglycol en une proportion de 10 à 20% en poids,
- un agent tensio-actif non ionique en une proportion de 1 à 2,5% en poids,
- un agent séquestrant en une proportion de 0,5 à 2,5 mmol/l.

Le procédé de traitement prophylactique conduisant à une désinfection complète en moins de 30 secondes et non irritante de la mammite chez la vache laitière, conforme à l'invention, est caractérisé par le fait que la composition de traitement prophylactique rapide et non irritante, conforme à l'invention, est mise en oeuvre à la température ambiante, par trempage du trayon avant ou après la traite ou par frottement de ce dernier notamment au moyen d'un support textile imbibé de ladite composition.

Selon un mode de réalisation avantageux de la composition de traitement prophylactique rapide et non irritant, conforme à l'invention, l'alcool à bas poids moléculaire est choisi dans le groupe comprenant l'éthanol, l'isopropanol et le n-propanol.

Selon un autre mode de réalisation avantageux de la composition de traitement prophylactique rapide et non irritant, conforme à l'invention, l'agent tensio-actif non ionique est choisi dans le groupe comprenant les esters de sorbitan et les alkylphénols polyéthoxylés.

Selon un autre mode de réalisation avantageux de la composition de traitement prophylactique rapide et non irritant, conforme à l'invention, l'agent séquestrant est choisi dans le groupe comprenant les dérivés à fonction carboxylique, notamment les acides éthylène-diamine-tétracétique (EDTA), nitrilotriacétique (NTA), diéthylène triaminopentacétique (DTPA) et N-hydroxyéthyl-éthylène-diamino-N,N',N''-triacétique (HEDTA), ainsi que les dérivés à fonction phosphonique, notamment l'acide hydroxy-1-éthane-1,1-diphosphonique (HEDP).

Selon un autre mode de réalisation avantageux de la composition de traitement prophylactique rapide et non irritant, conforme à l'invention, celle-ci comporte un agent microbiocide soluble dans l'eau, notamment choisi dans le groupe comprenant les ammoniums quaternaires, en particulier le chlorure de didécyldiméthylammonium, le digluconate de chlorhexidine et le chlorhydrate de polyhexaméthylène biguanide et les iodophores, en particulier les complexes iodés du nonylphénoxy-polyéthoxyéthanol et la polyvinyl-pyrrolidone iodée.

Pour illustrer ce qui précède, on indique ci-après une composition de traitement prophylactique rapide et non irritant, conforme à l'invention, ayant donné de bons résultats et qui se présente sous la forme d'une solution liquide d'un pH d'environ 5:

| Nature du constituant | % en poids |
|---|---|
| n-propanol | 14 |
| Propylèneglycol | 10 |
| EDTA, sel disodique | 0,04 soit 1 mM/l |
| Polysorbate 20 | 1 |
| Digluconate de chlorhexidine en solution aqueuse à 20% | 3,1 |
| Eau distillée q.s.p. | 100 |

Ceci étant, il est intéressant de noter que le propylèneglycol n'est pas connu comme ayant des propriétés bactéricides, mais comme humidifiant en cosmétique. Selon la législation européenne des additifs alimentaires, il est accepté comme véhicule des colorants, émulsifiants, antioxy-gènes et enzymes, ce qui prouve qu'il ne présente pas de danger.

En rapport avec l'action des agents séquestrants, il est à noter qu'elle n'est pas due à une séquestration de la dureté d'eau, puisque les compositions selon l'invention peuvent être à base d'eau distillée.

Concernant plus particulièrement l'EDTA, il est connu que cet agent séquestrant potentialise l'activité des agents biocides vis-à-vis des bactéries gram⁻ mais non pas vis-à-vis des bactéries gram⁺; or, l'efficacité des compositions de traitement prophylactique rapide et non irritant, conformes à l'invention, a été testée par exemple sur *Enterococcus hirae* qui est une bactérie gram⁺; il est conformes à l'invention, a été testée par exemple sur *Enterococcus hirae* qui est une bactérie gram⁺; il est également à noter que le sel d'EDTA est autorisé par la FDA (Food and Drug Administration) comme conservateur d'aliment, ce qui met l'accent sur son caractère non nocif dans le cas d'utilisation dans des formulations pouvant entrer au contact des aliments.

On notera, par ailleurs, que les agents séquestrants préférés, à savoir le NTA et l'EDTA, sont salifiés partiellement ou totalement par de la soude ou de la potasse, de telle manière que les compositions obtenues aient un pH compris entre 3,5 et 7.

Parmi les agents tensio-actifs non ioniques, on préfère les condensats d'oxyde d'éthylène sur alcool gras, sur alkylphénol ou sur ester d'acide gras et de polyol, suffisamment éthoxylés pour être solubles dans le milieu; on peut citer le polysorbate 20 (monolaurate de sorbitan condensé avec 20 moles d'oxyde d'éthylène) dont la référence dans la CEE est E 432, dont l'utilisation comme additif dans les boissons à base de produits laitiers est autorisée et dont la propriété de potentialiser l'activité désinfectante des alcools n'était pas connue, ce produit étant surtout connu comme émulgateur utilisable dans les aliments et en cosmétique. Le polysorbate 20 est commercialisé sous la marque "TWEEN 20" par la Société Zénéca ou sous la marque "CRILLET 1" par la Société Croda Ltd; on citera également le produit commercialisé sous la marque "TRITON X 100" par la Société Union Carbide et qui comporte un alkylphénol polyéthoxylé à 9-10 moles.

D'un point de vue plus général, on indique que, dans les compositions de traitement prophylactique rapide et non irritant, conformes à l'invention, les adjuvants apportent leurs propriétés intéressantes intrinsèques; à cet égard, on peut citer les propriétés humectantes du polypropylèneglycol et les propriétés adoucissantes du polysorbate 20.

L'invention sera encore mieux comprise à l'aide des exemples non limitatifs qui suivent et dans lesquels on a décrit et testé des modes de réalisation avantageux des compositions de traitement prophylactique rapide et non irritant conformes à l'invention.

L'efficacité exprimée en pourcentage dans ces exemples est obtenue selon l'équation:

$$\frac{\Delta}{\log N_1} \times 100$$

utilisée dans la méthode d'essai décrite ci-après et qui traduit en fait le pourcentage de population bactérienne détruite par rapport à la population initiale.

Dans les exemples, les proportions des constituants des compositions conformes à l'invention sont exprimées en pourcentage pondéral; pour que les essais bactériologiques soient comparables, on a ajusté dans chaque formule le pH à 3,5 à l'aide d'acide chlorhydrique dilué.

La méthode d'essai dont il a été question ci-dessus permet d'évaluer la rapidité d'action des compositions testées à concentration constante.

Dans le cadre de cette méthode, il s'agit tout d'abord de préparer des suspensions bactériennes.

A partir d'une culture sur pente gélosée, on prépare une suspension bactérienne en prélevant à l'anse sur la gélose et en reportant le prélèvement dans un tube contenant 10 ml de solution de tryptone-sel et quelques billes de verre. On forme une suspension homogène au Vortex. A l'aide d'un spectrophotomètre à 620 nm, on ajuste la suspension-mère à $10^9$ bactéries par ml environ.

Le nombre exact de bactéries de la suspension-mère (No) est déterminé après 7 dilutions décimales successives en tryptone-sel et inclusion de 2 x 1 ml de la dernière dilution en gélose Plate Count Agar (PCA), ce qui donne un nombre de bactéries N. Dans ces conditions, No = N x $10^7$.

Pour déterminer le caractère bactéricide d'une composition donnée, on procède comme suit.

Dans un tube stérile, on mélange 4,35 ml de la composition à tester et 0,5 ml de diluant (tampon Tris-HCl à 10 mM, pH 7,5, stérile); on agite au Vortex.

On ajoute 0,15 ml de la suspension-mère de bactéries préparée ci-dessus, en déclenchant le chronomètre dès le début de l'addition. On a alors dans le mélange réactionnel:

- 87% de la composition testée
- 10% de diluant
- 3% de tryptone-sel
- $10^7$ bactéries/ml environ.

On laisse en contact à 20°C±1 pendant 30 secondes, 1 et 2 minutes.

Très exactement à la fin de la période d'incubation, on transfère 1 ml du mélange réactionnel dans 9 ml de neutralisant (Tris-HCl 12,12 g/l - MgSO$_4$,7H$_2$O 2,46 g/l - CaCl$_2$ 4,44 g/l - NaCl 11,78 - Gélatine 0,2% (P/V). On mélange au Vortex.

Après 5 minutes de contact exactement, on procède au comptage des bactéries survivantes par dilutions décimales successives dans le neutralisant dilué 2 fois et inclusion de 2 x 1 ml de chacun des tubes de dilution en gélose PCA, ce qui donne la valeur n.

La validité de l'agent neutralisant est systématiquement contrôlée en parallèle de chaque essai d'une composition à tester.

Pour ce faire, on mélange 4,35 ml de la composition à tester avec 0,65 ml de diluant.

On transfère 1 ml de ce mélange dans 9 ml de neutralisant et on déclenche le chronomètre dès le début de l'addition.

Après 30 secondes de temps de contact très exactement, on ensemence ce mélange avec 0,1 ml de la suspension-mère diluée au 1/10ème ($10^8$ bactéries/ml environ). On agite au Vortex.

Après 5 minutes de temps de contact très exactement, les bactéries survivantes sont dénombrées par dilutions décimales successives dans du neutralisant dilué 2 fois, par inclusion de 2 x 1 ml de chacun des tubes de dilution en gélose PCA, ce qui donne la valeur n'.

Pour démontrer l'absence d'activité bactéricide propre du neutralisant, on ensemence un tube contenant 9 ml de neutralisant avec 1 ml de la suspension bactérienne à $10^3$ bactéries/ml environ. Après 10 minutes de temps de contact très exactement, les bactéries survivantes sont numérales par inclusion de 2 x 1 ml du mélange dans la gélose PCA, ce qui donne la valeur n1.

Pour l'expression et l'interprétation des résultats, l'essai d'une composition donnée ne doit être pris en compte que si la validité de la neutralisation est assurée, autrement dit si

n1 = N

et

n' ≥ 0,5 N (critères retenus par la norme NF T 72150).

Les résultats sont exprimés en chute de population (exprimée en logarithme):

$$\Delta = \log N_1 - \log n$$

où

$$N_1 = \frac{No \times 0,15}{5}$$

(nombre de bactéries mises en test, Log $N_1$ représentant donc la chute de population maximale).

Lorsque n = O, on ne peut conclure à la mortalité complète des $10^7$ bactéries/ml mises en test puisque, du fait de la dilution au 1/10ème dans le neutralisant, le contrôle de mortalité ne s'effectue que sur $10^6$ bactéries/ml. (Il peut éventuellement subsister 9 bactéries/ml dans le mélange réactionnel initial).

Dans les résultats, une activité bactéricide contrôlée comme étant complète (n = 0) s'exprime donc comme > log ($N_1$ - 1) et comme log $N_1$.

On a testé les microorganismes suivants qui se rencontrent dans la mammite chez la vache laitière:

- *Staphylococcus aureus* (CIP 53154)
- *Enterococcus hirae* (CIP 5855)
- *Escherichia coli* (CIP 54127)
- *Pseudomonas aeruginosa* (CIP A22).

Ces souches ont été conservées et préparées pour les essais selon les modalités de la norme NF T 72150/1.

## EXEMPLE 1

Dans cet exemple, on a testé, sur un mélange eau/alcool en $C_2$ ou eau/alcool en $C_3$, l'influence de la nature et de la dose de l'alcool testé.

Ainsi, on a déterminé pour différentes compositions le pourcentage de population bactérienne (souche utilisée: *Enterococcus hirae* CIP 5855) après 30 secondes, 1 et 2 minutes d'action de chaque composition.

Les résultats sont réunis dans le tableau I.

TABLEAU I

| Composition | Pourcentage de destruction en | | |
|---|---|---|---|
| | 30 secondes | 1 minute | 2 minutes |
| n-propanol 10% eau distillée qsp 100% | 0 | 0 | 0 |
| n-propanol 16% eau distillée qsp 100% | 0 | 0 | 0 |
| n-propanol 20% eau distillée qsp 100% | 100 | | |
| n-propanol 25% eau distillée qsp 100% | 100 | | |
| n-propanol 30% eau distillée qsp 100% | 100 | | |
| n-propanol 35% eau distillée qsp 100% | 100 | | |
| éthanol 16% eau distillée qsp 100% | 0 | 0 | 0 |

L'examen des résultats réunis dans le tableau I montre qu'à partir d'une dose de 20% d'alcool n-propylique ou d'éthanol, on obtient une activité bactéricide satisfaisante en 30 secondes.

## EXEMPLE 2

Dans cet exemple, on a testé l'influence de quantités croissantes de propylèneglycol sur les propriétés bactéricides d'une solution à 16% de n-propanol dans l'eau, la souche utilisée étant la même que dans l'exemple 1.

Les résultats sont réunis dans le tableau II.

TABLEAU II

| Composition | Pourcentage de destruction en | | |
|---|---|---|---|
| | 30 secondes | 1 minute | 2 minutes |
| n-propanol 16% eau distillée qsp 100% | 0 | 0 | 0 |
| n-propanol 16% propylèneglycol 5% eau distillée qsp 100% | 29 | 70,5 | 100 |

EP 0 689 768 B1

TABLEAU II   (suite)

| Composition | Pourcentage de destruction en | | |
|---|---|---|---|
| | 30 secondes | 1 minute | 2 minutes |
| n-propanol 16% propylèneglycol 10% eau distillée qsp 100% | 71-78 | | |
| n-propanol 16% propylèneglycol 15% eau distillée qsp 100% | 86 | | |
| n-propanol 16% propylèneglycol 20% eau distillée qsp 100% | 100 | | |
| n-propanol 16% propylèneglycol 30% eau distillée qsp 100% | 100 | | |

L'examen des résultats réunis dans le tableau II montre que l'activité bactéricide et la rapidité d'action d'une solution à 16% de n-propanol devient satisfaisante à partir d'une proportion de 20% de propylèneglycol, 100% des populations bactériennes étant détruites en 30 secondes.

## EXEMPLE 3

Dans cet exemple, on a étudié l'influence de la nature de l'alcool à bas poids moléculaire, ainsi que de celle du polyol et de sa proportion dans la composition désinfectante.
La souche utilisée est la même qu'à l'exemple 1 et les résultats obtenus avec du n-propanol et de l'éthanol en tant qu'alcool à bas poids moléculaire, du propylèneglycol, de l'éthylèneglycol et du glycérol en tant que polyol, ont été réunis dans le tableau III.

TABLEAU III

| Composition | Pourcentage de destruction en | | |
|---|---|---|---|
| | 30 secondes | 1 minute | 2 minutes |
| n-propanol 16% eau distillée qsp 100% | 0 | 0 | 0 |
| éthanol 16% eau distillée qsp 100% | 0 | 0 | 0 |
| n-propanol 16% propylèneglycol 10% eau distillée qsp 100% | 71-78 | | |
| éthanol 16% glycérol 10% eau distillée qsp 100% | 0 | 0 | 0 |
| éthanol 16% glycérol 20% eau distillée qsp 100% | 0 | 0 | 0 |
| éthanol 16% éthylèneglycol 10% eau distillée qsp 100% | 0 | 0 | 0 |
| n-propanol 16% propylèneglycol 20% eau distillée qsp 100% | 100 | | |

L'examen des résultats réunis dans le tableau III montre que l'amélioration de l'activité bactéricide de la composition désinfectante n'est obtenue qu'en utilisant le propylèneglycol à une proportion de 20% dans une solution de n-propanol à 16%.

## EXEMPLE 4

Dans cet exemple, on a étudié l'influence de la nature et de la proportion de séquestrant sur l'activité bactéricide d'une solution à base de n-propanol à 16% dans l'eau distillée.
La souche utilisée est la même qu'à l'exemple 1 et les résultats obtenus ont été réunis dans le tableau IV.

TABLEAU IV

| Composition | Pourcentage de destruction en | | |
|---|---|---|---|
| | 30 secondes | 1 minute | 2 minutes |
| n-propanol 16% eau distillée qsp 100% | 0 | 0 | 0 |
| n-propanol 16% EDTA 0,02% eau distillée qsp 100% | 74 | 100 | |
| n-propanol 16% EDTA 0,04% eau distillée qsp 100% | 83 | 100 | |
| n-propanol 16% EDTA 0,1% eau distillée qsp 100% | 100 | | |

TABLEAU IV   (suite)

| Composition | Pourcentage de destruction en | | |
|---|---|---|---|
| | 30 secondes | 1 minute | 2 minutes |
| n-propanol 16% EDTA 0,2% eau distillée qsp 100% | 100 | | |
| n-propanol 16% EDTA 0,4% eau distillée qsp 100% | 75 | | |
| n-propanol 16% NTA 0,016% eau distillée qsp 100% | 100 | | |
| n-propanol 16% HEDP 0,02% eau distillée qsp 100% | 5 | 41 | 41 |

L'examen des résultats réunis dans le tableau IV montre qu'à partir d'une dose de 0,1% (soit 2,5 mmole/l) d'EDTA et d'une dose de 0,016% (soit 0,8 mmole/l) de NTA, on obtient la destruction à 100% des populations bactériennes en 30 secondes; dans le cas du HEDP à 0,02% (soit 1 mmole/l), le résultat n'est pas satisfaisant, cette dose devant donc normalement être augmentée.

**EXEMPLE 5**

Dans cet exemple, on a étudié l'influence de la nature du tensio-actif sur les propriétés bactéricides d'une solution à base de n-propanol à 16% dans l'eau distillée.
La souche utilisée est la même qu'à l'exemple 1 et les résultats obtenus ont été réunis dans le tableau V.

TABLEAU V

| Composition | Pourcentage de destruction en | | |
|---|---|---|---|
| | 30 secondes | 1 minute | 2 minutes |
| n-propanol 16% eau distillée qsp 100% | 0 | 0 | 0 |
| n-propanol 16% TA I (1) 1% eau distillée qsp 100% | 19 | 34 | 62 |
| n-propanol 16% TA II (1) 1% eau distillée qsp 100% | 100 | | |

(1) TA I = polysorbate 20
(2) TA II = nonylphénol polyéthoxylé (10 moles)

L'examen des résultats réunis dans le tableau V montre que le polysorbate 20 à une proportion de 1% ne donne pas de résultat satisfaisant alors que le nonylphénol polyéthoxylé (10 moles), utilisé lui aussi à 1%, conduit à 100% de destruction des populations bactériennes en 30 secondes.

**EXEMPLE 6**

Dans cet exemple, on a étudié l'influence de la présence simultanée d'un polyol et de quantités croissantes d'un tensio-actif non ionique constitué par le polysorbate 20 (TA I) sur les propriétés bactéricides d'une solution à base de n-propanol à 16% dans l'eau distillée.
La souche utilisée est la même qu'à l'exemple 1 et les résultats obtenus ont été réunis dans le tableau VI.

TABLEAU VI

| Composition | Pourcentage de destruction en | | |
|---|---|---|---|
| | 30 secondes | 1 minute | 2 minutes |
| n-propanol 16% eau distillée qsp 100% | 0 | 0 | 0 |
| n-propanol 16% propylèneglycol 10% TA I 0,1% eau distillée qsp 100% | 55 | 100 | |
| n-propanol 16% propylèneglycol 10% TA I 0,5% eau distillée qsp 100% | 76 | 100 | |

TABLEAU VI   (suite)

| Composition | Pourcentage de destruction en | | |
|---|---|---|---|
| | 30 secondes | 1 minute | 2 minutes |
| n-propanol 16% propylèneglycol 10% TA I 1% eau distillée qsp 100% | 81 | 100 | |
| n-propanol 16% propylèneglycol 10% TA I 2,5% eau distillée qsp 100% | 100 | 100 | |
| n-propanol 16% propylèneglycol 10% TA I 5% eau distillée qsp 100% | 100 | 100 | |
| n-propanol 16% propylèneglycol 10% eau distillée qsp 100% | 71-78 | | |

L'examen des résultats réunis dans le tableau VI montre que, pour une proportion de 10% de propylèneglycol, on obtient une destruction à 100% des populations bactériennes en 30 secondes à partir d'une concentration en TA I de 2,5%.

## EXEMPLE 7

Dans cet exemple, on a étudié l'influence de la présence simultanée d'un polyol constitué par du propylèneglycol, d'un tensio-actif non ionique constitué par le polysorbate 20 et d'un séquestrant constitué par l'EDTA, sur les propriétés bactéricides d'une solution à base de n-propanol à 16% dans l'eau distillée.

La souche utilisée est la même qu'à l'exemple 1 et les résultats obtenus ont été réunis dans le tableau VII.

TABLEAU VII

| Composition | Pourcentage de destruction en | | |
|---|---|---|---|
| | 30 secondes | 1 minute | 2 minutes |
| n-propanol 16% eau distillée qsp 100% | 0 | 0 | 0 |
| n-propanol 16% propylèneglycol 10% TA I (1) 1% EDTA 0,04% eau distillée qsp 100% | 100 | | |
| n-propanol 12% propylèneglycol 20% TA I (1) 1% EDTA 0,04% eau distillée qsp 100% | 100 | | |

L'examen des résultats réunis dans le tableau VII montre qu'il suffit, pour un volume de n-propanol dans l'eau de 16%, d'une concentration de 10% en propylèneglycol simultanément à une concentration de 1% en polysorbate 20 et de 0,04% d'EDTA pour obtenir une destruction à 100% des populations bactériennes en 30 secondes.

## EXEMPLE 8

Dans cet exemple, on a étudié l'influence, sur les propriétés bactéricides d'une solution à base de n-propanol à 16% dans l'eau distillée, du propylèneglycol seul (10%), de l'EDTA seul (0,04%), de l'EDTA utilisé simultanément au propylèneglycol (mêmes concentrations que ci-dessus), du TA I (1%) utilisé simultanément au propylèneglycol (10%) et du TA I (1%) utilisé simultanément à l'EDTA (0,04%), la souche étant, cette fois-ci, le *Staphylococcus aureus* CIP 5710.

Les résultats obtenus ont été réunis dans le tableau VIII.

TABLEAU VIII

| Composition | Pourcentage de destruction en | | |
|---|---|---|---|
| | 30 secondes | 1 minute | 2 minutes |
| n-propanol 16% eau distillée qsp 100% | 66 | 100 | |
| n-propanol 16% propylèneglycol 10% eau distillée qsp 100% | 100 | | |
| n-propanol 16% EDTA 0,04% eau distillée qsp 100% | 100 | | |
| n-propanol 16% EDTA 0,04% propylèneglycol 10% eau distillée qsp 100% | 100 | | |
| n-propanol 16% propylèneglycol 10% TA I 1% eau distillée qsp 100% | 100 | | |

TABLEAU VIII   (suite)

| Composition | Pourcentage de destruction en | | |
|---|---|---|---|
| | 30 secondes | 1 minute | 2 minutes |
| n-propanol 16% TA I 1% EDTA 0,04% eau distillée qsp 100% | 100 | | |

L'examen des résultats réunis dans le tableau VIII montre que, dans le cas du *Staphylococcus aureus,* l'activité bactéricide de la solution de n-propanol seule est déjà de 66% en 30 secondes et qu'elle passe à 100% de destruction des populations bactériennes pour chacune des autres compositions étudiées.

## EXEMPLE 9

Dans cet exemple, on a étudié l'influence, sur les propriétés bactéricides d'une solution à base de n-propanol à 16% dans l'eau distillée, du TA I (1%) seul, du propylèneglycol (10%) seul, de l'EDTA (0,04%) seul, de la présence simultanée du propylèneglycol (10%) et du TA I (1%), de la présence simultanée du TA I (1%) et de l'EDTA (0,04%), de la présence simultanée du propylèneglycol (10%) et de l'EDTA (0,04%) et de la présence simultanée du TA I (1%), de l'EDTA (0,04%) et du propylèneglycol (10%), la souche étant, cette fois-ci, la souche *Escherichia coli* CIP 54127.
Les résultats obtenus ont été réunis dans le tableau IX.

TABLEAU IX

| Composition | Pourcentage de destruction en | | |
|---|---|---|---|
| | 30 secondes | 1 minute | 2 minutes |
| n-propanol 16% eau distillée qsp 100% | 52 | 100 | |
| n-propanol 16% TA I (1) 1% eau distillée qsp 100% | 100 | | |
| n-propanol 16% propylèneglycol 10% eau distillée qsp 100% | 100 | | |
| n-propanol 16% EDTA 0,04% eau distillée qsp 100% | 100 | | |
| n-propanol 16% propylèneglycol 10% TA I 1% eau distillée qsp 100% | 100 | | |
| n-propanol 16% TA I 1% EDTA 0,04% eau distillée qsp 100% | 100 | | |
| n-propanol 16% propylèneglycol 10% EDTA 0,04% eau distillée qsp 100% | 100 | | |
| n-propanol 16% TA I 1% EDTA 0,04% propylèneglycol 10% eau distillée qsp 100% | 100 | | |

L'examen des résultats réunis dans le tableau IX montre qu'il suffit d'une concentration de 10% en propylèneglycol simultanément à une concentration de 1% en polysorbate 20 et de 0,04% d'EDTA pour obtenir une destruction à 100% des populations bactériennes en 30 secondes.
D'un point de vue général, il est possible de déduire de l'ensemble des résultats apparaissant à l'examen des exemples 1 à 9 que, grâce à l'invention, il devient possible d'abaisser, dans les compositions de traitement prophylactique rapide et non irritant, la teneur en alcool au moins jusqu'à 12%.

## Revendications

**1.** Utilisation pour la fabrication d'un médicament pour le traitement prophylactique de la mammite chez la vache laitière par désinfection complète et non irritante du trayon avant la traite en moins de 30 secondes, d'une composition exempte de glutaraldéhyde, de cations di- et trivalents et de polymère filmogène soluble dans l'eau et les alcanols inférieurs et comportant, en solution dans l'eau, de 10 à 18 % en poids d'un alcool choisi dans le groupe comprenant l'éthanol, l'isopropanol et le n-propanol et au moins l'un des trois adjuvants suivants, à savoir :

- le propylèneglycol en une proportion de 10 à 20 % en poids,
- un agent tensio-actif non ionique en une proportion de 1 à 2 ,5 % en poids,
- un agent séquestrant en une proportion de 0,5 à 2,5 mmole/l.

2. Utilisation selon la revendication 1, d'une composition dans laquelle l'agent tensio-actif non ionique est choisi dans le groupe comprenant les esters de sorbitan et les alkylphénols polyéthoxylés.

3. Utilisation selon l'une des revendications 1 et 2, d'une composition dans laquelle l'agent séquestrant est choisi dans le groupe comprenant les dérivés à fonction carboxylique, notamment les acides éthylène-diamine-tétracétique (EDTA), nitrilotriacétique (NTA), diéthylène triaminopentacétique (DTPA) et N-hydroxyéthyl-éthylènediamino-N,N",N"-triacétique (HEDTA), ainsi que les dérivés à fonction phosphonique, notamment l'acide hydroxy-1-éthane-1,1-diphosphonique (HEDP).

4. Utilisation selon l'une des revendications 1 à 3, d'une composition comportant en outre un agent microbiocide soluble dans l'eau, notamment choisi dans le groupe comprenant les ammonium quaternaires, en particulier le chlorure de didécyldiméthylammonium, le digluconate de chlorhexidine et le chlorhydrate de polyhexaméthylène-biguanide et les iodophores, en particulier les complexes iodés du nonylphénoxy-polyéthoxyéthanol et la polyvinyl-pyrrolidone iodée.

**Patentansprüche**

1. Verwendung von einer Zusammensetzung, die von Glutaraldehyd, von zwei- und dreiwertigen Kationen und von einem in Wasser und niederen Alkanolen löslichen filmbildenden Polymer frei ist und in Lösung in Wasser 10 bis 18 Gew.-% eines Alkohols, ausgewählt aus der Gruppe umfassend Ethanol, Isopropanol und n-Propanol, und mindestens einen der folgenden drei Zusatzstoffe, nämlich:

    Propylenglycol in einem Anteil von 10 bis 20 Gew.-%,

    ein nichtionisches oberflächenaktives Mittel in einem Anteil von 1 bis 2,5 Gew.-%,

    ein Maskierungsmittel in einem Anteil von 0,5 bis 2,5 mmol/l enthält,

    zur Herstellung eines Arzneimittels für die prophylaktische Behandlung der Euterentzündung bei der Milchkuh durch vollständige und nichtreizende Desinfektion der Zitze vor dem Melken in weniger als 30 Sekunden.

2. Verwendung nach Anspruch 1, von einer Zusammensetzung, in der das nichtionische oberflächenaktive Mittel aus der Gruppe, umfassend die Sorbitanester und die polyethoxylierten Alkylphenole, ausgewählt wird.

3. Verwendung nach einem der Ansprüche 1 und 2, von einer Zusammensetzung, in der das Maskierungsmittel aus der Gruppe, umfassend die Derivate mit Carbonsäurefunktion, insbesondere Ethylendiamintetraessigsäure (EDTA), Nitrilotriessigsäure (NTA), Diethylentriaminpentaessigsäure (DTPA) und N-Hydroxy-ethyl-ethylendiamin-N,N',N"-triessigsäure (HEDTA) sowie Derivate mit Phosphonsäurefunktion, insbesondere 1-Hydroxy-ethan-1,1-diphosphonsäure (HEDP), ausgewählt wird.

4. Verwendung nach einem der Ansprüche 1 bis 3, von einer Zusammensetzung, die außerdem ein in Wasser lösliches mikrobizides Mittel enthält, das insbesondere ausgewählt wird aus der Gruppe umfassend die quatemären Ammoniumverbindungen, insbesondere Didecyldimethylammoniumchlorid, Chlorhexidindigluconat und Polyhexamethylenbiguanid-hydrochlorid, und die Iodophore, insbesondere iodierte Komplexe von Nonylphenoxy-polyethoxyethanol und iodiertes Polyvinylpyrrolidon.

**Claims**

1. Use, for the manufacture of a medicinal product for the prophylactic treatment of mastitis in dairy cows by complete and non-irritant disinfection of the udders before milking, in less than 30 seconds, of a composition which is free of glutaraldehyde, of divalent and trivalent cations and of water-soluble film-forming polymer and lower alkanols and comprising, dissolved in water, from 10% to 18% by weight of an alcohol chosen from the group comprising ethanol, isopropanol and n-propanol and at least one of the following three adjuvants, namely:

    - propylene glycol in a proportion of from 10% to 20% by weight,
    - a nonionic surfactant in a proportion of from 1% to 2.5% by weight,

- a sequestering agent in a proportion of from 0.5 mmol/l to 2.5 mmol/l.

2. Use according to Claim 1, of a composition in which the nonionic surfactant is chosen from the group comprising sorbitan esters and polyethoxylated alkylphenols.

3. Use according to either of Claims 1 and 2, of a composition in which the sequestering agent is chosen from the group comprising derivatives containing a carboxylic function, in particular ethylenediaminetetraacetic acid (EDTA), nitrilotriacetic acid (NTA), diethylenetriaminopentaacetic acid (DTPA) and N-hydroxyethylethylenediamino-N,N', N''-triacetic acid (HEDTA), as well as derivatives containing a phosphonic function, in particular 1-hydroxyethane-1,1-diphosphonic acid (HEDP).

4. Use according to one of Claims 1 to 3, of a composition also comprising a water-soluble microbiocidal agent chosen in particular from the group comprising quaternary ammoniums, in particular didecyldimethylammonium chloride, chlorhexidine digluconate and polyhexamethylenebiguanide hydrochloride and iodophores, in particular iodinated complexes of nonylphenoxy-polyethoxyethanol and iodinated polyvinylpyrrolidone.